# EUROPEAN PATENT APPLICATION

(11) **EP 4 361 379 A1**
(43) Date of publication of application: **01.05.2024**
(21) Application number: 23169940.6
(22) Date of filing: 26.04.2023
(51) Int. Cl.: E04H 4/16

(54) **GARBAGE BIN**

(30) Priority: 28.10.2022 CN 202222870931 U
(71) Applicant: Shenzhen Aiper Intelligent Co., Ltd, Shenzhen (CN)
(72) Inventor: Wang, Yang, Shenzhen (CN); Yu, Xueliang, Shenzhen (CN); Yan, Wenkai, Shenzhen (CN)
(74) Representative: Zaboliene, Reda

(57) **Abstract**

The present application discloses a garbage bin, which includes a main body and a filter component. The main body is provided with an opening. The filter component is detachably provided on the opening to close the opening. The main body is further provided with a water inlet. The filter component is detachably provided on the opening, the opening is not only configured to drain water during operation but also configured to pour garbage after operation, thus, it is unnecessary to provide another window for cleaning the garbage, thereby beneficially reducing the processing difficulty; in addition, after the filter component is disassembled, cleaning of a worker for an inside of the garbage bin and the filter component may be further facilitated, thereby improving the cleaning efficiency.

## Description

### Technical Field

The present application relates to the technical field of a swimming pool cleaning device, and in particular to a garbage bin.

### Background

With the development of an automation industry, an increasing number of robots appear in our life. A robot swimming pool cleaner is a robot cleaner researched and developed for cleaning the swimming pool and may clean a bottom and a wall of the swimming pool and filter water in the swimming pool. During an operation process, the robot swimming pool cleaner sucks pollutants in the swimming pool into a garbage bin; as the garbage bin is provided with a filter screen, the pollutants are blocked in the garbage bin and water drains from the robot swimming pool cleaner through the filter screen, therefore, the garbage bin is required for periodic cleaning, however, the existing garbage bin is only provided with one opening for pouring out the garbage, an inside of the garbage bin is difficult to clean, some dead corners cannot be swept cleanly; in addition, the filter screen on the garbage bin is inconvenient to disassemble, some garbage is stuck on the filter screen, thus the filter screen is inconvenient to clean, thereby bringing great trouble to cleaning staff.

### Summary

A technical problem to be solved by the present application is to provide a garbage bin for convenience of cleaning.

In order to solve the above technical problem, the present application adopts the following technical solution: the garbage bin includes a main body and a filter component; the main body is provided with an opening; the filter component is detachably provided on the opening to close the opening; the filter component is in a bendable structure; and the main body is further provided with a water inlet.

Further, the filter component includes a frame and a filter screen which are fixedly connected, and the frame and the main body are detachably connected.

Further, the main body is provided with an installation block detachably connected with the frame of the filter component.

Further, the frame is provided with a first connecting piece, and the main body is provided with a second connecting piece matched with the first connecting piece.

Further, there are a plurality of first connecting pieces and a plurality of second connecting pieces; the first connecting pieces and the second connecting pieces are in one-to-one correspondence; each of the first connecting pieces and the second connecting pieces corresponding therewith form a connected component; when the filter component is disassembled, a plurality of connected components are disconnected in order.

Further, the first connecting pieces and the second connecting pieces are in buckle connection, magnetic attraction connection or plugging and unplugging connection.

Further, the main body is in a shape of a box, at least one surface of the main body is provided openly to form the opening.

Further, a top of the main body is provided with a cross beam connected to a left side plate and a right side plate thereof.

Further, the cross beam is provided with a first handle, and the filter component is provided with a through hole for avoidance of the first handle.

Further, the filter component is provided with a second handle.

The present application has the beneficial effects: the filter component is detachably provided on the opening, the opening is not only configured to drain water during operation but also configured to pour garbage after operation, thus, it is unnecessary to provide another window for cleaning the garbage, thereby beneficially reducing the processing difficulty; in addition, due to the bendable structure, the filter component is convenient to assemble and disassemble; after the filter component is disassembled, cleaning of a worker for an inside of the garbage bin and the filter component may be further facilitated, thereby improving the cleaning efficiency and the cleaning quality.

### Brief Description of the Drawings

Fig. 1 illustrates a structural schematic diagram of a garbage bin in embodiment I of the present application.
Fig. 2 illustrates a structural schematic diagram of a main body of a garbage bin in embodiment I of the present application.
Fig. 3 illustrates a structural schematic diagram of a filter component of a garbage bin in embodiment I of the present application.
Fig. 4 illustrates a structural schematic diagram in response to a half-open state of a filter component of a garbage bin in embodiment I of the present application.

### Description of numeral signs:

1. Main body, 2. Second connecting piece, 12. Installation block, 13. Cross beam, 14. First handle, 15. Water inlet, 16. Cover plate, 17. Left side plate, 18. Right side plate, 19. Opening.
2. Filter component, 21. Frame, 22. Filter screen, 23. First connecting piece, 24. Through hole, 25. Second handle.

### Detailed Description of the Embodiments

In order to illustrate technical contents, achieved purposes and effects of the present application in detail, the technical contents, the achieved purposes and the effects are described below in combination with implementation modes and drawings.

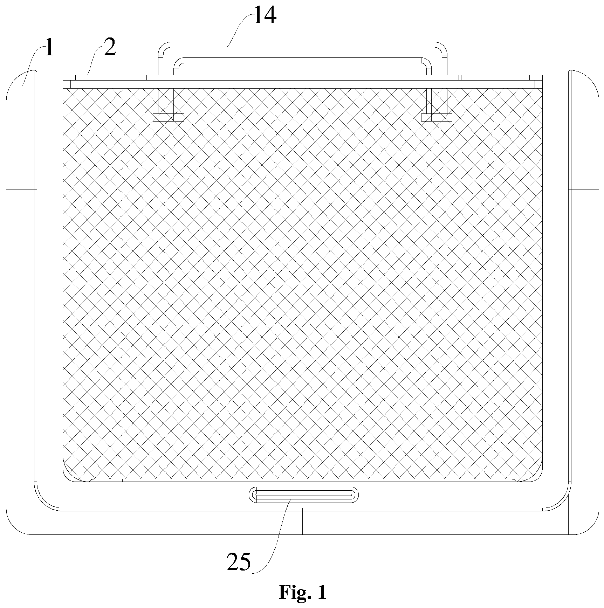

Referring to Figs. 1-4, a garbage bin includes a main body 1 and a filter component 2; the main body1 is provided with an opening 19; the filter component 2 is detachably provided on the opening to close the opening; the filter component 2 is in a bendable structure; and the main body 1 is further provided with a water inlet 15.

It may be known from the above description that the present application has the beneficial effects: the filter component 2 is detachably provided on the opening, the opening is not only configured to drain water during operation but also configured to pour garbage after operation, thus, it is unnecessary to provide another window for cleaning the garbage, thereby beneficially reducing the processing difficulty; in addition, due to the bendable structure, the filter component 2 is convenient to assemble and disassemble; after the filter component 2 is disassembled, cleaning of a worker for an inside of the garbage bin and the filter component may be further facilitated, thereby improving the cleaning efficiency and the cleaning quality.

Further, the filter component 2 includes a frame 21 and a filter screen 22 which are fixedly connected, and the frame 21 and the main body 1 are detachably connected.

Further, the main body 1 is provided with an installation block 12, a shape of the frame 21 is matched with the shape of the installation block 12, the installation block 12 is configured to support the frame 21 and detachably connected with the frame 21 of the filter component.

It may be known from the above description that when a worker installs the filter component 2, the filter component 2 and the main body 1 are rapidly aligned due to the installation block 12, thereby beneficially improving the installation efficiency.

Further, the frame 21 is provided a first connecting piece 23, and the main body 1 is provided with a second connecting piece 11 matched with the first connecting piece 23.

It may be known from the above description that the first connecting piece 23 and the second connecting piece 11 are provided to realize detachable connection of the main body 1 and the filter component 2.

Further, there are a plurality of first connecting pieces 23 and a plurality of second connecting pieces 11; the first connecting pieces 23 and the second connecting pieces 11 are in one-to-one correspondence; each of the first connecting pieces 23 and the second connecting pieces 11 corresponding therewith form a connected component; when the filter component 2 is disassembled, a plurality of connected components are disconnected in order.

It may be known from the above description that when the filter component 2 is disassembled, the worker may select to disconnect part or all of the connected components as required so as to form a half-open state or a completely open state of the opening.

Further, the first connecting pieces 23 and the second connecting pieces 11 are in buckle connection, magnetic attraction connection or plugging and unplugging connection.

It may be known from the above description that the filter component 2 may be rapidly disassembled through buckle connection, magnetic attraction connection or plugging and unplugging connection, thereby improving the disassembling efficiency.

Further, the main body 1 is in a shape of a box, at least one wall surface of the main body 1 is provided openly to form the opening 19.

Further, a top of the main body 1 is provided with a cross beam 13 connected to a left side plate 17 and a right side plate 18 thereof.

It may be known from the above description that the cross beam 13 may enhance the structure strength of the main body 1.

Further, the cross beam 13 is provided with a first handle 14, and the filter component 2 is provided with a through hole 24 for avoidance of the first handle 14.

It may be known from the above description that the first handle 14 may facilitate withdrawing of the worker for the garbage bin.

Further, the filter component 2 is provided with a second handle 25.

It may be known from the above description that the first handle 25 may facilitate force application of the worker for the filter component 2 during disassembling.

### Embodiment I

Referring to Figs. 1-4, embodiment I of the present application provides a garbage bin, which may be widely applied to a robot swimming pool cleaner.

The garbage bin includes a main body 1 and a filter component 2; the main body1 is provided with an opening; the filter component 2 is detachably provided on the opening to close the opening; the filter component 2 is in a bendable structure; and the main body 1 is further provided with a water inlet 15.

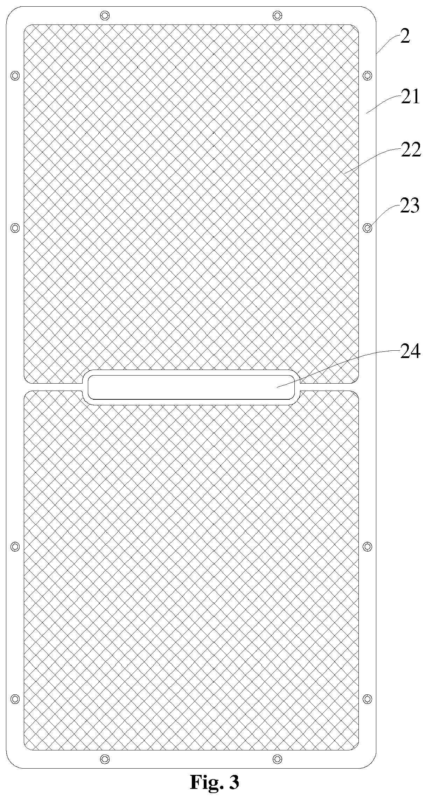

Referring to Fig. 1 and Fig. 3, the filter component 2 includes a frame 21 and a filter screen 22 which are fixedly connected, and the frame 21 and the main body 1 are detachably connected. Optionally, a check valve is provided on the water inlet 15, preferably, a cover plate 16 is provided on the water inlet 15 and may close the water inlet 15 unidirectionally, that is, a water flow may flush away the cover plate 16 and flows from the water inlet 15 to the main body 1 of the garbage bin, sewage flows from the water inlet 15 to the main body 1 and then drains out after being filtered by the filter screen 22 of the filter component 2, but the water flow is unable to flush away the cover plate 16 to flow from an inside of the main body 1 of the garbage bin to an outside of the main body 1 through the water inlet 15. In the present embodiment, the filter component 2 is made from a flexible material; when being installed on the main body 1, the frame 21 may be bent according to a shape of the main body 1 to fit with the main body 1; the filter component 2 may be bent to close the opening on different planes; and meanwhile, processing, storage and transportation of the filter component 2 may be facilitated.

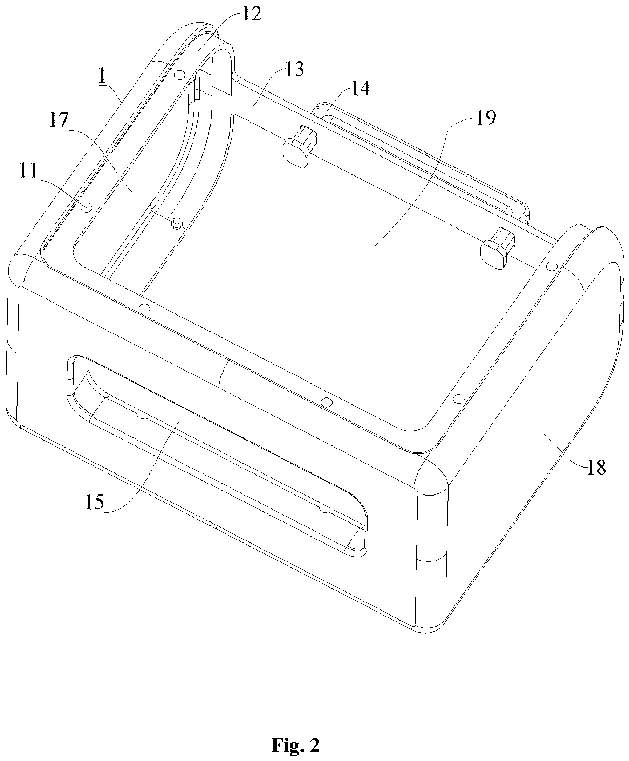

Referring to Fig. 2, the main body 1 is provided with an installation block 12, a shape of the frame 21 is matched with the shape of the installation block 12. In the present embodiment, the installation block 12 is provided along a contour of the opening of the main body 1; when the filter component 2 is installed, the frame 21 is placed in the installation block 12 to abut against the main body 1, such that the filter component 2 and the main body 1 are aligned; then the frame 21 is manually bent in a direction of the installation block 12.

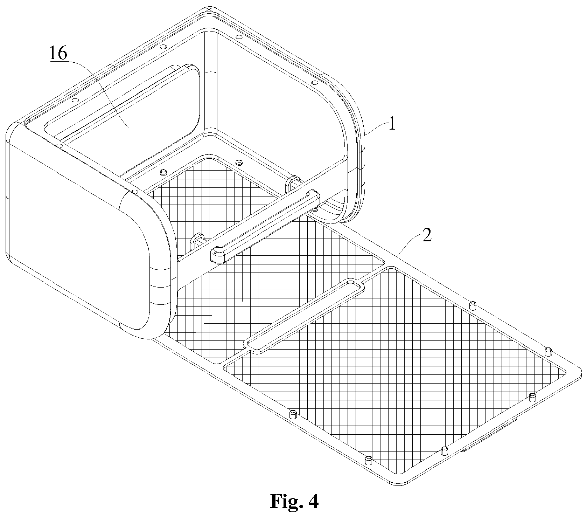

Referring to Fig. 4, the frame 21 is provided with a first connecting piece 23, and the main body 1 is provided with a second connecting piece 11 matched with the first connecting piece 23. There are a plurality of first connecting pieces 23 and a plurality of second connecting pieces 11; the first connecting pieces 23 and the second connecting pieces 11 are in one-to-one correspondence; each of the first connecting piece 23s and the second connecting pieces 11 corresponding therewith form a connected component; when the filter component 2 is disassembled, a plurality of connected components are disconnected in order. In the present embodiment, the second connecting pieces 11 are provided on the installation block 12, the plurality of second connecting pieces 11 are spaced at an appropriate distance; when the filter component 2 is disassembled, the filter component 2 is separated with the main body 1 segmentally; when a separated opening is big enough, a worker may stop separation to start cleaning.

Referring to Fig. 2 and Fig. 3, the first connecting pieces 23 and the second connecting pieces 11 are in buckle connection, magnetic attraction connection or plugging and unplugging connection. In the present embodiment, the first connecting pieces 23 and the second connecting pieces 11 are in plugging and unplugging connection, the first connecting pieces 23 are fixed pins, the second connecting pieces 11 are fixed holes, and the fixed pins and the fixed holes are in interference fit. In other embodiments, the first connecting pieces 23 may be magnets or iron sheets, the second connecting pieces 11 are iron sheets or magnets corresponding therewith, the magnetic attraction connection is realized through attraction force of the magnets and the iron sheets, or, the first connecting pieces 23 and the second connecting pieces 11 are in buckle connection, the main body 1 and the filter component 2 are connected through a buckle.

Referring to Fig. 1, the main body 1 is in a shape of a box, that is, an inside of the main body is hollow; at least one wall surface of the main body 1 is provided openly to form the opening 19. In the present embodiment, a front side wall, a rear side wall and a top wall of the main body 1 are provided openly to form the opening 19; the cleaning efficiency of the garbage bin is beneficially improved by increasing an area of the opening 19, a dead corner position in the garbage bin which may not be seen by the worker is further avoided, thereby improving the clean degree of the garbage bin. In other embodiments, the opening may be formed by providing one or two surface(s) of the main body 1 openly.

Referring to Fig. 2 and Fig. 3, a top of the main body 1 is provided with a cross beam 13 connected to a left side plate 17 and a right side plate 18 thereof; the cross beam 13 is provided with a first handle 14, and the filter component 2 is provided with a through hole 24 for avoidance of the first handle 14. In the present embodiment, a rod of the first handle 14 is slidably provided on the cross beam 13; when the first handle 14 is not used, the rod of the first handle 14 is retracted into the main body 1 of the garbage bin after passing through the through hole 24, thereby reducing an occupied volume of the whole garbage bin.

Referring to Fig. 1, the filter component 2 is provided with a second handle 25. In the present embodiment, the second handle 25 is provided on one end of the frame 21; when the filter component 2 is disassembled, the worker may pick up the filter component 2 only by vigorously stabilizing the main body 1 with one hand and grasping the second handle 25 with the other hand, thereby greatly facilitating disassembling of the worker for the filter component 2.

In conclusion, according to the garbage bin provided by the present application, the filter component 2 is detachably provided on the opening 19, the opening 19 is not only configured to drain water during operation but also configured to pour garbage after operation, thus, it is unnecessary to provide another window for cleaning the garbage, thereby beneficially reducing the processing difficulty; in addition, due to the bendable structure, the filter component 2 is convenient to assemble and disassemble; after the filter component 2 is disassembled, cleaning of a worker for an inside of the garbage bin and the filter component 2 may be further facilitated, thereby improving the cleaning efficiency and the cleaning quality; when the worker installs the filter component 2, the filter component and the main body are rapidly aligned due to the installation block 12 provided on the main body, thereby beneficially improving the installation efficiency.

The above mentioned content is only the embodiment of the present application, and is not intended to limit the patent scope of the present application; equivalent transformations made by use of the specification and drawings of the present application, or direct or indirect applications to related technical fields shall fall within the patent protection scope of the present application.

## Claims

1. A garbage bin, comprising a main body and a filter component, wherein the main body is provided with an opening, the filter component is detachably provided on the opening to close the opening, the filter component is in a bendable structure, and the main body is further provided with a water inlet.

2. The garbage bin as claimed in claim 1, wherein the filter component comprises a frame and a filter screen which are fixedly connected, and the frame and the main body are detachably connected.

3. The garbage bin as claimed in claim 2, wherein the main body is provided with an installation block detachably connected with the frame of the filter component.

4. The garbage bin as claimed in claim 2, wherein the frame is provided with a first connecting piece, and the main body is provided with a second connecting piece matched with the first connecting piece.

5. The garbage bin as claimed in claim 4, wherein there are a plurality of first connecting pieces and a plurality of second connecting pieces, the first connecting pieces and the second connecting pieces are in one-to-one correspondence, and each of the first connecting pieces and the second connecting pieces corresponding therewith form a connected component.

6. The garbage bin as claimed in claim 4, wherein the first connecting pieces and the second connecting pieces are in buckle connection, magnetic attraction connection or plugging and unplugging connection.

7. The garbage bin as claimed in claim 1, wherein the main body is in a shape of a box, and at least one wall surface of the main body is provided openly to form the opening.

8. The garbage bin as claimed in claim 7, wherein the main body comprises a left side plate and a right side plate, and a top of the main body is provided with a cross beam connected to the left side plate and the right side plate.

9. The garbage bin as claimed in claim 8, wherein the cross beam is provided with a first handle, and the filter component is provided with a through hole for avoidance of the first handle.

10. The garbage bin as claimed in claim 1, wherein the filter component is provided with a second handle.
